# EUROPÄISCHE PATENTANMELDUNG

(11) **EP 0 923 021 A2**
(43) Veröffentlichungstag der Anmeldung: **16.06.1999**
(21) Anmeldenummer: 98114377.9
(22) Anmeldetag: 31.07.1998
(51) Int. Cl.: G06F 3/023

(54) **Bedienvorrichtung für ein elektrisches Gerät**

(30) Priorität: 10.12.1997 DE 19754738
(71) Anmelder: ROBERT BOSCH GMBH, 70442 Stuttgart (DE)
(72) Erfinder: Gehrke, Helmar-Steffen, 71735 Eberdingen/Hochdorf (DE); Eggers, Norbert, 35516 Muenzenberg (DE)

(57) **Zusammenfassung**

Es wird eine Bedienvorrichtung (1) für ein elektrisches Gerät vorgeschlagen, die eine verbesserte Bedienerführung ermöglicht. Die Bedienvorrichtung (1) umfaßt Bedienelemente (5,..., 10), die vor ihrer Betätigung jeweils auswählbar sind und für die nach ihrer Auswahl eine Wiedergabe der durch ihre Betätigung auslösbaren Bedienfunktion an einer Ausgabevorrichtung (15) erfolgt. An der Ausgabevorrichtung (15) erfolgt eine Wiedergabe eines aktuellen Zustandes der den nicht ausgewählten Bedienelementen (5,..., 10) zugeordneten Bedienfunktionen.

## Beschreibung

### Stand der Technik

Die Erfindung geht von einer Bedienvorrichtung nach der Gattung des Hauptanspruchs aus.

Im Bereich von Personal Computern sind bereits Bedienvorrichtungen bekannt, bei denen Bedienelemente an einer Anzeigevorrichtung, beispielsweise an einem Monitor darstellbar sind. Bewegt man ein pfeilförmiges Auswahlelement beispielsweise mit einer Computermaus in den Bereich der Darstellung eines solchen Bedienelementes, so erscheint in einem Anzeigefeld ein Schriftzug, der angibt, welche Bedienfunktion bei Betätigung des durch das pfeilförmige Auswahlelement ausgewählten Elementes ausgelöst wird.

### Vorteile der Erfindung

Die erfindungsgemäße Bedienvorrichtung mit den Merkmalen des Hauptanspruchs hat demgegenüber den Vorteil, daß an der Ausgabevorrichtung eine Wiedergabe eines aktuellen Zustandes der den nicht ausgewählten Bedienelementen zugeordneten Bedienfunktionen erfolgt. Auf diese Weise wird ein Benutzer der Bedienvorrichtung durch die Ausgabevorrichtung umfassend über Bedienfunktionszustände der Bedienelemente und über die durch die Bedienelemente auslösbaren Bedienfunktionen informiert. Der Benutzer wird somit bei der Bedienung des elektrischen Gerätes durch die Ausgabevorrichtung erheblich unterstützt, so daß die Bedienung für den Benutzer erheblich vereinfacht wird. Ein Ausprobieren von Bedienelementen oder Nachlesen in einer Bedienungsanleitung ist für den Benutzer nicht mehr erforderlich, so daß auch eine schnellere Bedienung möglich ist.

Ein weiterer Vorteil besteht darin, daß der Benutzer sich vor der Betätigung eines Bedienelementes auf einfache Weise vergewissern kann, welche Bedienfunktion bei der Betätigung dieses Bedienelementes ausgeführt wird.

Ein weiterer Vorteil besteht darin, daß der Benutzer bei der Wiedergabe an der Ausgabevorrichtung auf einfache Weise unterscheiden kann, ob die Wiedergabe für ein Bedienelement dessen aktuellen Bedienfunktionszustand oder die bei dessen Betätigung gerade auslösbare Bedienfunktion kennzeichnet. Für diese Unterscheidung braucht der Benutzer nur zu prüfen, ob das entsprechende Bedienelement ausgewählt wurde oder nicht.

Durch die in den Unteransprüchen aufgeführten Maßnahmen sind vorteilhafte Weiterbildungen und Verbesserungen der im Hauptanspruch angegebenen Bedienvorrichtung möglich.

Besonders vorteilhaft ist es, daß eine Anzeige des aktuellen Zustandes der Bedienfunktionen nicht ausgewählter Bedienelemente und/oder der auslösbaren Bedienfunktionen ausgewählter Bedienelemente im Bereich der Darstellung der jeweiligen Bedienelemente erfolgt. Durch diese enge räumliche Zuordnung der Anzeige des aktuellen Zustandes der Bedienfunktionen bzw. der auslösbaren Bedienfunktionen zu den zugehörigen Bedienelementen werden die Übersichtlichkeit für den Benutzer erhöht und die Wahrscheinlichkeit für Fehlbedienungen der Bedienelemente durch den Benutzer erheblich reduziert, da er den Bedienelementen eindeutig den aktuellen Bedienfunktionszustand bzw. die jeweils auslösbare Bedienfunktion eindeutig zuordnen kann.

Ein weiterer Vorteil besteht darin, daß eine Anzeige des aktuellen Zustandes der Bedienfunktionen nicht ausgewählter Bedienelemente und/oder der auslösbaren Bedienfunktionen ausgewählter Bedienelemente mittels jeweils eines graphischen Symbols erfolgt. Auf diese Weise läßt sich die Anzeige des aktuellen Zustandes der Bedienfunktionen nicht ausgewählter Bedienelemente und/oder der auslösbaren Bedienfunktionen ausgewählter Bedienelemente bei größtmöglicher Übersichtlichkeit für den Benutzer und geringstmöglichem Platzbedarf an der Anzeigevorrichtung realisieren. Die Abmessungen der Anzeigevorrichtung werden daher durch die Anzeige des aktuellen Bedienfunktionszustandes bzw. der auslösbaren Bedienfunktionen nicht wesentlich bedingt. Die Verwendung graphischer Symbole führt außerdem zu einer schnelleren Assoziation des einem Bedienelement zugeordneten Bedienfunktionszustandes bzw. der einem Bedienelement gerade zugeordneten auslosbaren Bedienfunktion beim Benutzer.

Ein weiterer Vorteil besteht darin, daß bei einem ausgewählten Bedienelement sowohl eine Wiedergabe der durch ihre Betätigung auslösbaren Bedienfunktion als auch eine Wiedergabe ihres aktuellen Bedienfunktionszustandes an der Ausgabevorrichtung erfolgt. Auf diese Weise wird der Benutzer bei der Bedienung des Bedienelementes noch besser durch die Darstellung an der Ausgabevorrichtung unterstützt, da er für seine Entscheidung über eine Betätigung des Bedienelementes noch mehr Informationen zur Verfügung gestellt bekommt, so daß die Übersichtlichkeit für den Benutzer und der Bedienkomfort weiter erhöht werden.

Ein weiterer Vorteil besteht darin, daß die durch Betätigung eines ausgewählten Bedienelementes auslösbare Bedienfunktion vom aktuellen Bedienfunktionszustand des ausgewählten Bedienelementes abhängt. Auf diese Weise werden dem Benutzer bei der Auswahl eines Bedienelementes solche Bedienfunktionen nicht angeboten, die für den aktuellen Bedienfunktionszustand des Bedienelementes nicht sinnvoll oder nicht durchführbar sind. Auf diese Weise muß der Benutzer nicht selbst entscheiden, ob angebotene auslösbare Bedienfunktionen sinnvoll oder durchführbar sind, so daß die Bedienung für den Benutzer vereinfacht und übersichtlicher wird und Fehlbedienungen aufgrund der Auswahl einer nicht sinnvollen oder nicht durchführbaren Bedienfunktion durch den Benutzer ausgeschlossen werden.

### Zeichnung Ausführungsbeispiele der Erfindung sind in der Zeichnung

dargestellt und in der nachfolgenden Beschreibung näher erläutert. Es Zeigen Figur 1 ein erstes Ausführungsbeispiel einer erfindungsgemäßen Bedienvorrichtung, Figur 2 ein zweites Ausführungsbeispiel einer erfindungsgemäßen Bedienvorrichtung und Figur 3 ein Beispiel für die Zuordnung berührungssensitiver Tasten zu Bedienelementen.

### Beschreibung der Ausführungsbeispiele

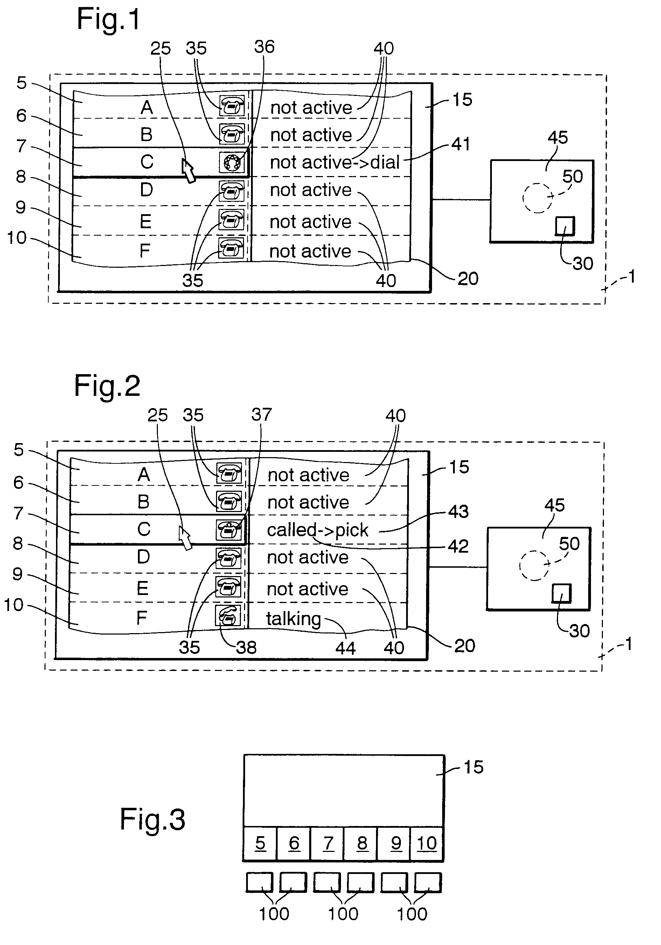

In Figur 1 kennzeichnet 1 eine Bedienvorrichtung, die eine als Anzeigevorrichtung ausgebildete Ausgabevorrichtung 15 und eine mit der Anzeigevorrichtung 15 verbundene Eingabe/Auswahleinheit 45 umfaßt. Die Bedienvorrichtung 1 dient dabei der Bedienung eines elektrischen Gerätes, beispielsweise eines Personal Computers, eines Komforttelefons oder dergleichen. Die Anzeigevorrichtung 15 kann dabei beispielsweise als Monitor, Display oder dergleichen ausgebildet sein. Die Eingabe-/Auswahleinheit 45 umfaßt ein Bestätigungselement 30 und ein als Trackball ausgebildetes Richtungselement 50 und kann beispielsweise als Computermaus ausgebildet sein. Das Bestätigungselement 30 kann dabei beispielsweise als Taste ausgebildet sein. Es ist auch denkbar, eine von einer Auswahleinheit getrennte Eingabeeinheit vorzusehen und das Bestätigungselement 30 an der Eingabeeinheit und das Richtungselement 50 an der Auswahleinheit vorzusehen. Das Richtungselement 50 kann auch in Form von Richtungstasten, als Joystick, als Schaltwippe mit unterschiedlichen Betätigungsrichtungen oder dergleichen ausgebildet sein.

An der Anzeigevorrichtung 15 sind in dem beschriebenen Ausführungsbeispiel gemäß Figur 1 sechs Bedienelemente 5,..., 10 dargestellt. Bei den Bedienelementen 5,..., 10 handelt es sich um sogenannte Partnertasten eines Komforttelefonendgerätes. Jede der Partnertasten 5,..., 10 ist durch einen Namen gekennzeichnet, so ein erstes Bedienelement 5 durch den Namen 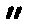 A", ein zweites Bedienelement 6 durch den Namen 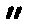 B", ein drittes Bedienelement 7 durch den Namen 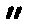 C", ein viertes Bedienelement 8 durch den Namen 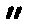 D", ein fünftes Bedienelement 9 durch den Namen 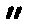 E" und ein sechstes Bedienelement 10 durch den Namen 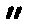 F". Im Bereich der Darstellung des jeweiligen Bedienelementes 5,..., 10 ist jeweils ein graphisches Symbol 35,..., 38 angeordnet. So ist im Bereich des ersten Bedienelementes 5, im Bereich des zweiten Bedienelementes 6, im Bereich des vierten Bedienelementes 8, im Bereich des fünften Bedienelementes 9 und im Bereich des sechsten Bedienelementes 10 jeweils ein erstes graphisches Symbol 35 angeordnet, das ein Telefonendgerät mit aufgelegtem Hörer darstellt. Im Bereich des dritten Bedienelementes 7 ist ein zweites graphisches Symbol 36 angeordnet, das eine Wählscheibe darstellt. Zusätzlich oder alternativ zu den graphischen Symbolen 35,..., 38 kann den Bedienelementen 5,..., 10 jeweils mindestens ein Anzeigetext 40,..., 44 in einem vom Bereich der Darstellung der jeweiligen Bedienelemente 5,..., 10 getrennten Anzeigebereich 20 der Anzeigevorrichtung 15 gemäß Figur 1 räumlich zugeordnet sein. Es kann jedoch auch vorgesehen sein, den jeweiligen Anzeigetext 40,..., 44 im Bereich des ihm zugeordneten Bedienelementes 5,..., 10 zusätzlich oder alternativ zu dem entsprechenden graphischen Symbol 35,..., 38 anzuordnen. Es kann auch vorgesehen sein, dem jeweiligen Bedienelement 5,..., 10 keinen Anzeigetext zuzuordnen. Weiterhin kann der Anzeigebereich 20 für die Anzeigetexte 40,..., 44 auch räumlich vom Bereich der Darstellung der Bedienelemente 5,..., 10 getrennt angeordnet sein. Die graphischen Symbole 35,..., 38 können auch räumlich getrennt vom Bereich zur Darstellung der Bedienelemente 5,..., 10, jedoch in räumlicher Zuordnung zu den jeweiligen Bedienelementen 5,..., 10 im Anzeigebereich 20 der Anzeigevorrichtung 15 dargestellt werden.

Gemäß Figur 1 ist dem ersten Bedienelement 5, dem zweiten Bedienelement 6, dem vierten Bedienelement 8, dem fünften Bedienelement 9 und dem sechsten Bedienelement 10 im Anzeigebereich 20 jeweils ein erster Anzeigetext 40 räumlich zugeordnet, der jeweils auf 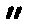 not active" lautet. Dem dritten Bedienelement 7 ist der erste Anzeigetext 40 und ein zweiter Anzeigetext 41, der auf 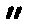 dial" lautet zugeordnet.

Mittels des Richtungselementes 50 läßt sich ein Auswahlelement 25, das beispielsweise in Pfeilform an der Anzeigevorrichtung 15 dargestellt ist, im Bereich der Darstellung der Bedienelemente 5,..., 10 zur Auswahl eines der Bedienelemente 5,..., 10 verschieben. Gemäß Figur 1 wurde das Auswahlelement 25 mittels des Richtungselementes 50 zum dritten Bedienelement 7 verschoben, so daß das dritte Bedienelement 7 ausgewählt wurde und graphisch von den anderen Bedienelementen 5, 6, 8, 9, 10 durch Schattierung seiner Umrandungslinien hervorgehoben ist. Ein ausgewähltes Bedienelement 5,..., 10 kann jedoch auch durch eine unterschiedliche Farbgebung von den nicht ausgewählten Bedienelementen oder auf andere graphische Weise, beispielsweise durch Blinken oder dergleichen, abgehoben werden. Die graphischen Symbole und Anzeigetexte nicht ausgewählter Bedienelemente geben den aktuellen Bedienfunktionszustand der entsprechenden Bedienelemente wieder. Gemäß Figur 1 wurden das erste Bedienelement 5, das zweite Bedienelement 6, das vierte Bedienelement 8, das fünfte Bedienelement 9 und das sechste Bedienelement 10 nicht ausgewählt. Den nicht ausgewählten Bedienelementen 5, 6, 8, 9, 10 ist das erste graphische Symbol und der erste Anzeigetext zugeordnet. Dem läßt sich entnehmen, daß der aktuelle Bedienfunktionszustand dieser nicht ausgewählten Bedienelemente darin besteht, daß die Telefonendgeräte der durch die auf den nicht ausgewählten Bedienelementen durch ihren Namen gekennzeichneten Teilnehmer in einem Ruhezustand mit aufgelegtem Hörer sind. Das zweite graphische Symbol 36 beim dritten Bedienelement 7 deutet mit der Wählscheibe an, daß eine Betätigung dieses ausgewählten dritten Bedienelementes 7 eine Bedienfunktion auslöst, die eine Anwahl des durch auf dem dritten Bedienelement 7 mit seinem Namen gekennzeichneten Teilnehmers bewirkt. Zusätzlich zu der Wählscheibe könnte das zweite graphische Symbol 36 noch durch das erste graphische Symbol 35 im Bereich des dritten Bedienelementes 7 ergänzt werden, um anzudeuten, daß das Telefonendgerät dieses Teilnehmers sich gerade im Ruhezustand befindet. Dem dritten Bedienelement 7 sind jedenfalls mit dem ersten Anzeigetext 40 ein den Bedienfunktionszustand und mit dem zweiten Anzeigetext 41 ein die durch Betätigung des dritten Bedienelmentes 7 auslösbare Bedienfunktion kennzeichnende Anzeigetexte im Anzeigebereich 20 räumlich zugeordnet. Dabei könnte jedoch dem dritten Bedienelement 7 auch nur der zweite Anzeigetext 41 zur Darstellung der bei Betätigung des dritten Bedienelementes 7 auslösbaren Bedienfunktion räumlich zugeordnet sein. Durch den zweiten Anzeigetext 41 wird dem Benutzer kenntlich gemacht, daß bei Betätigung des dritten Bedienelementes 7 eine Anwahl des entsprechenden Teilnehmers erfolgt.

Bei nicht ausgewählten Bedienelementen erfolgt also an der Anzeigevorrichtung 15 eine Wiedergabe des jeweiligen aktuellen Bedienfunktionszustandes. Bei den ausgewählten Bedienelementen erfolgt an der Anzeigevorrichtung 15 hingegen eine Wiedergabe der durch Betätigung der ausgewählten Bedienelemente gerade auslösbaren Bedienfunktion und gegebenenfalls zusätzlich eine Wiedergabe des aktuellen Bedienfunktionszustandes des ausgewählten Bedienelementes. Dabei kann es vorgesehen sein, daß die durch Betätigung eines ausgewählten Bedienelementes auslösbare Bedienfunktion vom aktuellen Bedienfunktionszustand des ausgewählten Bedienelementes abhängt. Im Ausführungsbeispiel gemäß Figur 1 besteht der Bedienfunktionszustand des dritten Bedienelementes 7 darin, daß das Telefonendgerät des entsprechenden Teilnehmers im Ruhezustand ist. In Abhängigkeit dieses Ruhezustandes wird dem Benutzer durch die Wählscheibe des zweiten graphischen Symbols 36 bzw. durch den zweiten Anzeigetext 41 angedeutet, daß durch Betätigung des dritten Bedienelementes 7 eine Anwahl des im Ruhezustand befindlichen Telefonendgerätes des entsprechenden Teilnehmers erfolgt. Eine solche Anwahl wäre beispielsweise nicht sinnvoll oder nicht durchführbar, wenn sich das entsprechende Telefonendgerät in einem Zustand mit abgehobenem Hörer befände, so daß eine Anwahl nicht zu einem Verbindungsaufbau mit dem entsprechenden Teilnehmer führen würde. In diesem Fall wurde also als auslösbare Bedienfunktion für das dritte Bedienelement 7 nicht die Anwahl angeboten und an der Anzeigevorrichtung 15 für das ausgewählte dritte Bedienelement 7 dargestellt.

Durch Betätigung des Bestätigungselementes 30 läßt sich dann die Bedienfunktion des ausgewählten dritten Bedienelementes 7 aktivieren, die dem Benutzer durch die graphische Darstellung mittels des zweiten graphischen Symbols 36 bzw. des zweiten Anzeigetextes 41 als auslösbare Bedienfunktion an der Anzeigevorrichtung 15 mitgeteilt wird.

In Figur 2 ist ein zweites Ausführungsbeispiel einer erfindungsgemäßen Bedienvorrichtung dargestellt. Im Ausführungsbeispiel gemäß Figur 2 kennzeichnen gleiche Bezugszeichen gleiche Elemente. Das Ausführungsbeispiel gemäß Figur 2 ist dabei gleich aufgebaut wie das Ausführungsbeispiel gemäß Figur 1 und unterscheidet sich vom Ausführungsbeispiel gemäß Figur 1 lediglich dadurch, daß das ausgewählte dritte Bedienelement 7 durch ein drittes graphisches Symbol 37 gekennzeichnet ist, das ein Telefonendgerät mit aufgelegtem Hörer und einem nach oben gerichteten Pfeil darstellt. Dem dritten Bedienelement 7 ist außerdem im Anzeigebereich 20 ein dritter Anzeigetext 42 und ein vierter Anzeigetext 43 zugeordnet, wobei der dritte Anzeigetext 42 den Bedienfunktionszustand des dritten Bedienelementes 7 kennzeichnet und auf 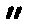 called" lautet und der vierte Anzeigetext 43 die durch Betätigung des dritten Bedienelementes 7 auslösbare Bedienfunktion kennzeichnet und auf 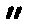 pick" lautet. Ein weiterer Unterschied des Ausführungsbeispiels gemäß Figur 2 gegenüber dem Ausführungsbeispiel gemäß Figur 1 besteht darin, daß dem sechsten Bedienelement 10 ein viertes graphisches Symbol 38 zugeordnet ist, das ein Telefonendgerät mit abgenommenem Hörer darstellt. Dem sechsten Bedienelement 10 ist außerdem im Anzeigebereich 20 ein fünfter Anzeigetext 44 zugeordnet, der den Zustand des sechsten Bedienelementes 10 kennzeichnet und auf 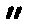 talking" lautet.

Auch im zweiten Ausführungsbeispiel gemäß Figur 2 ist das dritte Bedienelement 7 mittels des Auswahlelementes 25 ausgewählt, und das erste Bedienelement 5, das zweite Bedienelement 6, das vierte Bedienelement 8, das fünfte Bedienelement 9 und das sechste Bedienelement 10 sind nicht ausgewählt. Der aktuelle Bedienfunktionszustand des dritten Bedienelementes 7 besteht darin, daß der durch den Namen auf dem dritten Bedienelement 7 gekennzeichnete Teilnehmer gerade einen Anruf erhält. Durch das dritte graphische Symbol 37 und den vierten Anzeigetext 43 wird dem Benutzer des durch die Bedienvorrichtung 1 angesteuerten Komforttelefonendgerätes mitgeteilt, daß bei Betätigung des Bestätigungselementes 30 als Bedienfunktion des ausgewählten dritten Bedienelementes 7 die Entgegennahme des bei dem gekennzeichneten Teilnehmer eingehenden Rufes erfolgt, so daß bei Abwesenheit dieses Teilnehmers der Ruf dennoch entgegengenommen werden kann. Auch diese Bedienfunktion hängt somit vom aktuellen Bedienfunktionszustand des ausgewählten dritten Bedienelementes 7 ab.

Der aktuelle Bedienfunktionszustand des Telefonendgerätes des Teilnehmers, dessen Namen das sechste Bedienelement 10 kennzeichnet, besteht darin, daß der zugehörige Teilnehmer gerade ein Telefongespräch führt. Würde das sechste Bedienelement 10 mittels des Auswahlelementes 25 ausgewählt, könnte trotz des Gesprächszustandes des dem sechsten Bedienelement 10 zugeordneten Teilnehmers eine Anwahl mittels des zweiten graphischen Symbols 36 und des zweiten Anzeigetextes 41 angeboten werden, wenn als Leistungsmerkmal die Option 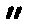 anklopfen" zur Verfügung steht, so daß der gerufene, dem sechsten Bedienelement 10 zugeordnete Teilnehmer trotz des Gesprächszustandes erkennt, daß er von einem dritten Teilnehmer erreicht werden möchte.

Zusätzlich oder anstelle der graphischen Symbole 35,..., 38 und/oder der Anzeigetexte 40,..., 44 kann den Bedienelementen 5,..., 10 auch eine graphische Animation zugeordnet werden, die dem Benutzer noch anschaulicher einen aktuellen Bedienfunktionszustand und/oder eine auslösbare Bedienfunktion mittels Bewegtbild darstellt. Es kann im übrigen auch vorgesehen sein, auch nicht ausgewählten Bedienelementen zusätzlich zur Wiedergabe ihres aktuellen Bedienfunktionszustandes auch die durch ihre Betätigung gerade auslösbare Bedienfunktion an der Anzeigevorrichtung 15 beispielsweise in gleicher Weise wie bei ausgewählten Bedienelementen an der Anzeigevorrichtung 15 darzustellen.

Bei Änderung des Zustandes eines Bedienelementes 5,..., 10 ändert sich das entsprechend zugehörige graphische Symbol 35,..., 38 und der zugehörige Anzeigetext 40,..., 44. Bei Auswahl eines Bedienelementes 5,..., 10 ändert sich das zugehörige graphische Symbol 35,..., 38 zur Anzeige der nach Betätigung des ausgewählten Bedienelementes auslösbaren Bedienfunktion ebenfalls und es wird ein entsprechender Anzeigetext im Anzeigefeld 20 in Zuordnung zu dem ausgewählten Bedienelement hinzugefügt.

Die Anzeigetexte 40,..., 44 und die graphischen Symbole 35,..., 38 müssen somit kontextabhängig dynamisch und flexibel an der Anzeigevorrichtung 15 darstellbar sein. Es kann auch vorgesehen sein, durch die graphischen Symbole 35,..., 38 nur aktuelle Bedienfunktionszustände und durch die Anzeigetexte 40,..., 44 nur auslösbare Bedienfunktionen an der Anzeigevorrichtung 15 darzustellen oder umgekehrt durch die graphischen Symbole 35,..., 38 nur auslösbare Bedienfunktionen und durch die Anzeigetexte 40,..., 44 nur aktuelle Bedienfunktionszustände. Bei Auswahl eines Bedienelementes 5,..., 10 kann auch vorgesehen sein, den zustandsbeschreibenden Anzeigetext durch den die auslösende Bedienfunktion beschreibenden Anzeigetext zu ersetzen, wie auch ein zustandsanzeigendes graphisches Symbol bei Auswahl eines entsprechenden Bedienelementes 5,..., 10 durch ein die auslösende Bedienfunktion kennzeichnendes graphisches Symbol ersetzt werden kann.

Es ist auch möglich, im Bereich der Bedienelemente 5,..., 10 an der Anzeigevorrichtung 15 Sensoren anzuordnen, mittels denen eine Auswahl eines Bedienelementes 5,..., 10 möglich ist. Dabei können beispielsweise berührungssensitive Elemente eingesetzt werden, so daß ein Bedienelement 5,..., 10 an der Anzeigevorrichtung 15 durch Berührung der Anzeigevorrichtung 15 im Bereich der Darstellung des auszuwählenden Bedienelementes ausgewählt werden kann. Eine Anzeigevorrichtung 15 mit berührungssensitiven Elementen ist beispielsweise in Form von Touchscreen-Monitoren bekannt.

Die Ausgabevorrichtung 15 kann alternativ oder zusätzlich zur Anzeigevorrichtung eine akustische Wiedergabevorrichtung umfassen, so daß auch eine akustische Wiedergabe des aktuellen Bedienfunktionszustandes der nicht ausgewählten Bedienelemente und der auslösbaren Bedienfunktionen der ausgewählten Bedienelemente erfolgen kann.

Es ist auch möglich, jedem Bedienelement 5,..., 10 gemäß Figur 3 eine berührungssensitive Taste 100 örtlich zuzuordnen. Dazu sind die erforderlichen berührungssensitiven Tasten 100 entsprechend räumlich benachbart zu dem jeweils zugeordneten Bedienelement 5,..., 10 anzuordnen. Eine Auswahl eines Bedienelementes 5,..., 10 erfolgt dann durch Berührung der zugeordneten berührungssensitiven Taste 100, und eine Bestätigung der getroffenen Auswahl erfolgt dann durch Niederdrücken dieser Taste 100. Die berührungssensitiven Tasten 100 vereinen somit die Funktion des Richtungselementes 50 und des Bestätigungselementes 30.

## Patentansprüche

1. Bedienvorrichtung (1) für ein elektrisches Gerät mit Bedienelementen (5,...,10), die vor ihrer Betätigung jeweils auswählbar sind und für die nach ihrer Auswahl eine Wiedergabe der durch ihre Betätigung auslösbaren Bedienfunktion an einer Ausgabevorrichtung (15) erfolgt, dadurch gekennzeichnet, daß an der Ausgabevorrichtung (15) eine Wiedergabe eines aktuellen Zustandes der den nicht ausgewählten Bedienelementen (5,...,10) zugeordneten Bedienfunktionen erfolgt.

2. Bedienvorrichtung (1) nach Anspruch 1, dadurch gekennzeichnet, daß die Ausgabevorrichtung (15) eine Anzeigevorrichtung ist, an der die Bedienelemente (5,...,10) darstellbar sind.

3. Bedienvorrichtung (1) nach Anspruch 2, dadurch gekennzeichnet, daß eine Anzeige des aktuellen Zustandes der Bedienfunktionen nicht ausgewählter Bedienelemente (5,...,10) und/oder der auslösbaren Bedienfunktionen ausgewählter Bedienelemente (5,...,10) im Bereich der Darstellung der jeweiligen Bedienelemente (5,...,10) erfolgt.

4. Bedienvorrichtung (1) nach Anspruch 2 oder 3, dadurch gekennzeichnet, daß eine Anzeige des aktuellen Zustandes der Bedienfunktionen nicht ausgewählter Bedienelemente (5,...,10) und/oder der auslösbaren Bedienfunktionen ausgewählter Bedienelemente (5,...,10) in einem vom Bereich der Darstellung der jeweiligen Bedienelemente (5,...,10) getrennten Anzeigebereich (20) der Anzeigevorrichtung (15) erfolgt.

5. Bedienvorrichtung (1) nach einem der vorherigen Ansprüche, dadurch gekennzeichnet, daß ein Auswahlelement (25) vorgesehen ist, mittels dem ein Bedienelement (5,...,10) auswählbar ist.

6. Bedienvorrichtung (1) nach einem der vorherigen Ansprüche, dadurch gekennzeichnet, daß ein Bestätigungselement (30) vorgesehen ist, mittels dem eine Bedienfunktion eines ausgewählten Bedienelementes (5,...,10) aktivierbar ist.

7. Bedienvorrichtung (1) nach einem der Ansprüche 2 bis 6, dadurch gekennzeichnet, daß eine Anzeige des aktuellen Zustandes der Bedienfunktionen nicht ausgewählter Bedienelemente (5,...,10) und/oder der auslösbaren Bedienfunktionen ausgewählter Bedienelemente (5,...,10) mittels jeweils eines grafischen Symbols (35,...,38) erfolgt.

8. Bedienvorrichtung (1) nach einem der Ansprüche 2 bis 7, dadurch gekennzeichnet, daß eine Anzeige des aktuellen Zustandes der Bedienfunktionen nicht ausgewählter Bedienelemente (5,...,10) und/oder der auslösbaren Bedienfunktionen ausgewählter Bedienelemente (5,...,10) mittels jeweils eines Anzeigetextes (40,...,44) erfolgt.

9. Bedienvorrichtung (1) nach einem der vorherigen Ansprüche, dadurch gekennzeichnet, daß bei einem ausgewählten Bedienelement (5,...,10) sowohl eine Wiedergabe der durch ihre Betätigung auslösbaren Bedienfunktion als auch eine Wiedergabe ihres aktuellen Bedienfunktionszustandes an der Ausgabevorrichtung (15) erfolgt.

10. Bedienvorrichtung (1) nach einem der vorherigen Ansprüche, dadurch gekennzeichnet, daß die durch Betätigung eines ausgewählten Bedienelementes (5,...,10) auslösbare Bedienfunktion vom aktuellen Bedienfunktionszustand des ausgewählten Bedienelementes (5,...,10) abhängt.
